# EUROPÄISCHE PATENTSCHRIFT

(11) **EP 1 924 824 B1**
(45) Veröffentlichungstag und Bekanntmachung des Hinweises auf die Patenterteilung: **17.12.2008**
(21) Anmeldenummer: 06791358.2
(22) Anmeldetag: 05.09.2006
(51) Int. Cl.: G01F 1/58

(54) **VERFAHREN ZUR MESSUNG DER FLIESSGESCHWINDIGKEIT EINES MEDIUMS**
METHOD FOR MEASURING THE FLOW SPEED OF A MEDIUM
PROCEDE POUR MESURER LA VITESSE D'ECOULEMENT D'UN FLUIDE

(30) Priorität: 13.09.2005 DE 102005043718
(43) Veröffentlichungstag der Anmeldung: 28.05.2008
(73) Patentinhaber: Zylum Beteiligungsgesellschaft mbH & Co. Patente II KG, 12529 Schönefeld / Waltersdorf (DE)
(72) Erfinder: STANGE, Gerd, 24589 Nortorf (DE)
(74) Vertreter: Zech, Stefan Markus
(86) Internationale Anmeldenummer: PCT/DE2006/001565
(87) Internationale Veröffentlichungsnummer: WO 2007/031053

(56) Entgegenhaltungen:
- DE-A1- 2 027 947
- DE-A1- 2 229 703
- DE-C1- 10 221 677

## Beschreibung

Die Erfindung betrifft ein Verfahren zum Messen der Fließgeschwindigkeit eines Mediums in einem von einem Magnetfeld durchsetzten Volumen, wobei im Medium durch seine Fließbewegung ein elektrisches Feld induziert wird. Die Erfindung betrifft insbesondere die Signalauskopplung bei einem magnetisch-induktiven Durchflusssensor (MID).

Die meisten der heute am Markt verfügbaren magnetisch-induktiven Strömungs- bzw. Durchflusssensoren arbeiten mit galvanischer Signalauskopplung und verlangen eine elektrische Mindestleitfähigkeit des Mediums. Die Messung der induzierten Spannung läuft hier praktisch auf eine Strommessung hinaus, die umso schwieriger ist, je höher der Innenwiderstand des Mediums ist. Darüber hinaus erfordert diese Art der Kopplung ein zeitlich veränderliches magnetisches Feld, um störende elektrochemische Potentiale an den metallisch leitenden Elektroden zu eliminieren.

Auch die am Markt verfügbaren Systeme mit der aus vielen Gründen vorteilhaften kapazitiven Signalauskopplung können nicht auf eine Mindestleitfähigkeit verzichten, da auch bei ihnen letztlich eine Strommessung erfolgt. Im Gegensatz zu galvanisch koppelnden Systemen ist bei ihnen aus prinzipiellen Gründen ein zeitlich veränderliches Magnetfeld nötig, um einen dauernden, alternierenden Stromfluss zu erzeugen.

Eine Alternative wird jedoch in der DE 102 21 677 C1 vorgestellt, indem das zeitlich veränderliche magnetische Feld durch zeitlich veränderliche Koppelkapazitäten ersetzt wird. Damit eröffnet sich die Möglichkeit, Permanentmagnete zu verwenden und so den beträchtlichen Leistungsbedarf zur Erzeugung eines magnetischen Wechselfeldes auf Null zu reduzieren. Jedoch ist auch diese Alternative - genau wie die zuvor beschriebenen Systeme - auf eine Mindestleitfähigkeit des Mediums angewiesen, da auch hier der durch die veränderlichen Kapazitäten verursachte Strom gemessen wird.

Ein weiterer Lösungsansatz, um das magnetisch-induktive Messverfahren bei nicht leitenden Medien anzuwenden, wird in der DE 198 43 808 A1 beschrieben, indem dort nicht unmittelbar die induzierte Spannung als Messgröße benutzt wird, sondern die entstehende dielektrische Polarisationsladung. Zwar ist hier keine Mindestleitfähigkeit des Mediums erforderlich. Jedoch lässt sich letzten Endes auch dieses Verfahren auf die Messung des aufgrund der zeitlich veränderlichen Polarisationsladung verursachten Verschiebungsstromes zurückführen. Wegen der geringen Höhe dieser Polarisationsladung gestaltet sich die Messung schwierig.

Weiter sind als Stand der Technik die in der DE 199 22 311 C2 beschriebene Anordnung zur Bestimmung von räumlichen Geschwindigkeitsverteilungen in elektrisch leitfähigen Flüssigkeiten, die in der japanischen Offenlegungsschrift JP 01178822 A dargestellte Vorrichtung zur Messung der Strömungsgeschwindigkeit mit einer Halbleiter-Einrichtung, die in der DE 2 401 641 A dargestellte Elektrodenanordnung für einen elektromagnetischen Strömungsmesser und der Artikel des Tewodros Amare "Design of an electromagnetic flowmeter for insulating liquids" in Meas. Sci. Technol. 10 (1999) S. 755 - 758 zu nennen.

Bis auf die letzte Entgegenhaltung werden die entsprechenden Verfahren ausnahmslos nur mit Hilfe einer Strommessung zu einem Erfolg führten, die bei den heute praktisch verfügbare Messsystem eine Mindestleitfähigkeit des Mediums voraussetzen. Daher sind die vorhandenen Systeme auf die Anwendung bei wässrigen Medien beschränkt.

Die letztgenannte Entgegenhaltung, der Artikel des Herrn Amare, setzt voraus, dass der Widerstand, bzw. Stromfluss, zwischen jeweils einer Elektrode und einer Abschirmelektrode zur Feststellung deren Kapazität gemessen wird. Dabei ist die magnetische Feldfrequenz und das elektrostatische sich einstellende Feld schwierig zu beherrschen.

Wünschenswert ist ein kapazitives Messverfahren, das unmittelbar auf die Wirkungen des induzierten elektrischen Feldes zugreift, ohne auf den Stromfluss im Medium angewiesen zu sein.

Nun ist aus der Elektrochemie bekannt, dass in jüngster Zeit bedeutende praktische Fortschritte bei der leistungslosen (elektrostatischen) Erfassung elektrochemischer Signale erzielt wurden. So sind heute Elektroden mit integrierten Feldeffekttransistoren zur Messung elektrochemischer Parameter (z.B. pH-Wert-Messung) flüssiger Medien kommerziell erhältlich. Diese Fortschritte geben Anlass, nicht nur elektrochemisch verursachte, sondern auch physikalisch verursachte elektrische Signale zu erfassen.

Es ist die Aufgabe der Erfindung, ein Verfahren zur kapazitiven Signalauskopplung bei der magnetisch-induktiven Durchfluss- bzw. Strömungsmessung zu schaffen, das die geschilderten, mit dem vorausgesetzten Stromfluss verbundenen Nachteile der heute bekannten Verfahren überwindet.

Zur Lösung dieser Aufgabe dient das Verfahren mit den kennzeichnenden Merkmalen des Patentanspruchs 1 in Verbindung mit dessen Oberbegriff. Vorteilhafte Ausgestaltungen des Verfahrens sind in den Unteransprüchen aufgeführt.

Erfindungsgemäß ist zur Messung der Fließgeschwindigkeit eines Mediums in einem von einem Magnetfeld durchsetzten Volumen mindestens ein in seinen Leitungseigenschaften steuerbarer Halbleiter an der Begrenzungsfläche des Volumens vorhanden, auf den das im Medium durch seine Fließbewegung in Wechselwirkung mit dem Magnetfeld induzierte elektrische Feld so einwirkt, dass seine Ladungsträgerkonzentrationen idealerweise nur durch dieses elektrische Feld, d.h. stromlos und daher leistungslos beeinflusst werden. Aus der damit verbundenen Widerstandsänderung wird auf die induzierte elektrische Feldstärke und aus dieser auf die Fließgeschwindigkeit des Mediums geschlossen.

Es ist bekannt, dass sich die nahezu leistungslose Steuerung der Leitungseigenschaften von Halbleitern am besten bei Feldeffekttransistoren (FET) erreichen lässt.

Unter der hier lediglich beispielhaften Annahme einer besonders einfachen Anordnung zur Beschreibung des erfindungsgemäßen Verfahrens ist ein solcher FET in der Voluiriengrenzfläche des Mediums so angebracht, dass nur sein Gate über eine auf ihm befindliche Isolierschicht in direktem Kontakt mit dem Medium steht. Dabei sollte die Isolierschicht eine möglichst kleine Dielektrizitätskonstante aufweisen, um die Abschirmung des induzierten Feldes möglichst zu minimieren.

Das durch die Fließbewegung des Mediums induzierte elektrische Feld wirkt kapazitiv über den Gateisolator auf den Leitungskanal des FET und ändert seinen Widerstand, der über die Source-Drain-Anschlüsse gemessen werden kann. Aus dieser Widerstandsänderung kann zunächst auf die induzierte elektrische Feldstärke und aus ihr auf die Fließgeschwindigkeit geschlossen werden.

Es ist im Sinne des erfindungsgemäßen Verfahrens besonders hervorzuheben, dass die an dieser beispielhaften Anordnung beschriebene Widerstandsänderung des Halbleiterkanals durch rein elektrische Feldwirkung ohne Stromfluss erfolgt, so dass eine leistungslose Steuerung vorliegt.

Die Vorteile der mit einer solchen stromlosen Steuerung des Halbleiterwiderstandes verbundenen Messung der induzierten elektrischen Feldstärke nach dem erfindungsgemäßen Verfahren sind offensichtlich: Durch den Wegfall der Forderung nach einer Mindestleitfähigkeit des Mediums ist das Verfahren nach wie vor für mit einer Mindestleitfähigkeit ausgestattete, zusätzlich aber für sehr schwach leitende und sogar für nicht leitende Medien geeignet.

Besonders bevorzugt wird das Verfahren mit Permanentmagneten durchgeführt. In diesem Falle versagen fast alle dem Stand der Technik folgenden Verfahren mit kapazitiver Signalauskopplung bei der Messung eines stationären Zustandes, wie er durch das Vorliegen einer konstanten Fließgeschwindigkeit gegeben ist, da sie eine Änderung des elektrischen Feldes voraussetzen, die nur bei einer Änderung der Fließgeschwindigkeit eintritt. Allein das Verfahren der DE 102 21 677 C1 ist für Permanentmagneten ausgelegt. Jedoch wird das Messsignal dort als Strom bei der erzwungenen Änderung der Koppelkapazitäten erfasst, die eine beständige Umladung der Kondensatoren mit sich bringt. Dies führt zugleich zu beständigen Ladungsverschiebungen im Medium vermöge elektrischer Induktion. Nur bei ausreichender Leitfähigkeit des Mediums ist deshalb ein klares Messsignal zu erwarten.

Die kapazitiven Verfahren nach dem Stand der Technik verrichten Arbeit am Medium, um seinen Fließzustand zu bestimmen.

Im Gegensatz dazu zeichnet sich das erfindungsgemäße Messverfahren gerade durch seine Fähigkeit aus, einen stationären Zustand des Gesamtmesssystems zu erfassen, indem die nach dem Verfahren für die Messung ausgenutzte Einstellung der Ladungsträgerdichte im Halbleiter durch das zu messende elektrische Feld der Änderung der Fließgeschwindigkeit und damit der Änderung dieses Feldes praktisch trägheitslos folgt.

Das erfindungsgemäße Verfahren erzeugt prinzipiell keine - gezielte - elektrische oder magnetische Feldänderung, die vom Medium wahrgenommen werden soll. Es wird während der Messung keine Arbeit am Medium verrichtet.

Ein weiterer Vorteil liegt in der vollständigen galvanischen Entkopplung zwischen der im Medium gelegenen Messstrecke und dem Leitungskanal des Halbleiters. Das über den Leitungskanal gewonnene Ausgangssignal lässt sich wegen der damit verbundenen Impedanzentkopplung flexibel an die Erfordernisse einer äußeren Auswerteschaltung ankoppeln und ohne Informationsverluste über größere Leitungslängen transportieren.

Das erfindungsgemäße Verfahren wird im Folgenden beispielhaft anhand einer Prinzipskizze in einer Zeichnung erläutert.

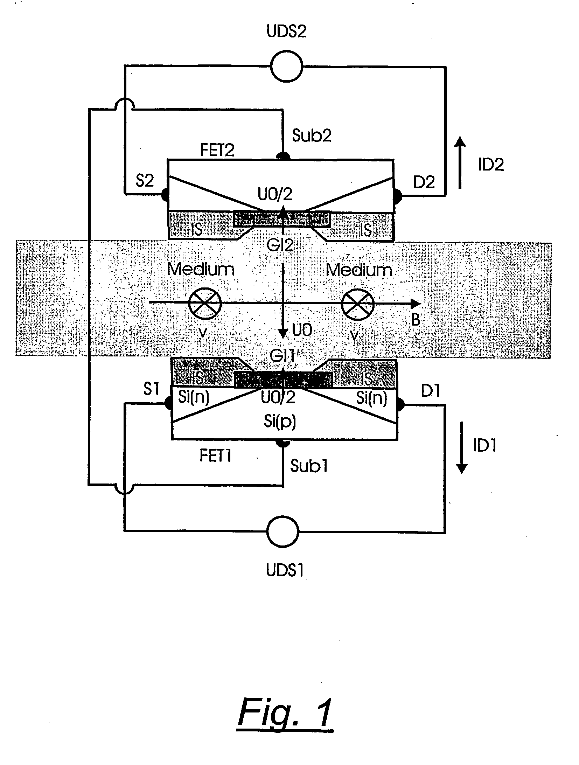

Die einzige **Fig. 1** zeigt einen schematischen Querschnitt einer möglichen Anordnung mit zwei einander gegenüberliegenden FETs (FET1, FET2, stark übertrieben in ihrer Größe dargestellt) gleicher Art mit dem zwischen ihnen befindlichen Medium. Die Source- (S) und Drain- (D) Kontakte sind jeweils mit der Spannungsquelle UDS1 bzw. UDS2. verbunden, so dass die Drainströme ID1 bzw. ID2 fließen. Die Source- und Draingebiete sind durch Isolierschichten IS vom Medium getrennt. Die induzierte Spannung U0, die aufgrund der Wechselwirkung des mit der Geschwindigkeit v strömenden Mediums mit dem Magnetfeld der Induktion B entsteht, teilt sich wegen der Verbindung der Substratanschlüsse (Sub im Bild) jeweils zur Hälfte auf die Gatespannungen an den Gateisolatoren GI1 und GI2 der FETs auf. An diesem Beispiel ist deutlich zu erkennen, dass die Gatespannungen oben und unten unterschiedliche Polarität bezogen auf die jeweiligen FETs haben, so dass sie zu einander entgegengesetzten Veränderungen der Drainströme führen, deren Differenz ein Maß für die Spannung U0 und damit für die Geschwindigkeit v ist.

Wie oben erwähnt, handelt es sich bei der in Fig. 1 dargestellten Anordnung lediglich um ein Beispiel. Je nach Art der verwendeten Halbleiterstruktur, den Eigenschaften des Mediums, der Art des Magnetfeldes - zeitlich konstant oder veränderlich - und nach Art der Messaufgabe - Strömungs- oder Durchflussmessung - ist eine große Zahl von Messanordnungen nach dem erfindungsgemäßen Verfahren denkbar, so dass eine flexible Anpassung an praktische Erfordernisse gewährleistet ist.

## Patentansprüche

1. Verfahren zur Messung der Fließgeschwindigkeit eines Mediums in einem von einem Magnetfeld durchsetzten Volumen,
**dadurch gekennzeichnet, dass**
der elektrische Widerstand eines benachbart dem Volumen angeordneten Halbleiters gemessen und mit einem Rechner daraus die Fließgeschwindigkeit des Mediums ermittelt wird.

2. Verfahren nach Anspruch 1, **dadurch gekennzeichnet, dass** das Volumen der Innenraum eines Rohrabschnitts ist und der Halbleiter an der Rohrwandung angeordnet ist.

3. Verfahren nach Anspruch 2, **dadurch gekennzeichnet, dass** wenigstens zwei Halbleiter an im wesentlichen einander jeweils paarweise gegenüberliegenden Stellen der Rohrwandung angeordnet sind, so dass die Verbindungslinie zwischen zwei Halbleitern senkrecht zur Fließrichtung des Mediums und im wesentlichen senkrecht zur Magnetfeldrichtung liegt.

4. Verfahren nach einem der vorhergehenden Ansprüche, **dadurch gekennzeichnet, dass** das Medium nichtleitend und elektrisch polarisierbar ist.

5. Verfahren nach einem der vorhergehenden Ansprüche, **dadurch gekennzeichnet, dass** zwischen Halbleiter und Medium eine Isolationsschicht angeordnet ist, die den Ladungsaustausch zwischen Medium und Halbleiter unterbindet.

6. Verfahren nach Anspruch 5, **dadurch gekennzeichnet, dass** die Isolationsschicht eine möglichst kleine Dielektrizitätskonstante aufweist.

7. Verfahren nach einem der vorhergehenden Ansprüche, **dadurch gekennzeichnet, dass** ein Permanentmagnetfeld verwendet wird.

8. Verfahren nach einem der vorhergehenden Ansprüche, **dadurch gekennzeichnet, dass** der Halbleiter als Gate-Elektrode eines (FET) ausgebildet ist, wobei der Feldeffekttransistors an der wenigstens einen Begrenzungsfläche des Volumens angeordnet ist.

9. Verfahren nach einem der Ansprüche 3 oder 8, **dadurch gekennzeichnet, dass** die Substrate wenigstens zweier gegenüberliegend angeordneter FET verbunden sind, so dass sie auf gleiches elektrisches Potential gehalten werden.

10. Verfahren nach einem der vorhergehenden Ansprüche, **dadurch gekennzeichnet, dass** ein durch den veränderlichen Widerstand des Halbleiters bestimmte elektrische Messkreis galvanisch von der im Medium liegenden Messstrecke entkoppelt ist und zur Impedanzanpassung an eine äußere Mess- und Auswerteschaltung herangezogen wird.

## Claims

1. A method of measuring the flow velocity of a medium in a volume permeated by a magnetic field,
**characterized in that**
the electric resistance of a semiconductor arranged adjacent to the volume is measured, and from that the flow velocity of the medium is determined by a computer.

2. The method according to claim 1, **characterized in that** the volume is the inner space of a tube section, and the semiconductor is arranged at the tube wall.

3. The method according to claim 2, **characterized in that** at least two semiconductors are arranged at locations of the tube wall each essentially opposing each other in pairs so that the connection line between two semiconductors is perpendicular to the flow direction of the medium and essentially perpendicular to the magnetic field direction.

4. The method of any one of the preceding claims, **characterized in that** the medium is non-conducting and electrically polarizable.

5. The method according to any one of the preceding claims, **characterized in that** an isolation layer is arranged between the semiconductor and the medium preventing the charge exchange between the medium and the semiconductor.

6. The method according to claim 5, **characterized in that** the isolation layer exhibits a dielectric constant as small as possible.

7. The method according to any one of the preceding claims, **characterized in that** a permanent magnetic field is used.

8. The method according to any one of the preceding claims, **characterized in that** the semiconductor is configured as a gate electrode of a field effect transistor (FET), the field effect transistor being arranged at the at least one boundary surface of the volume.

9. The method according to claim 3 or 8, **characterized in that** the substrates of at least two FETs arranged opposing each other are connected so that they are maintained at equal electric potential.

10. The method according to any one of the preceding claims, **characterized in that** an electric measurement circuit determined by the variable resistance of the semiconductor is galvanically uncoupled from the measurement path situated within the medium, and is used for impedance matching with an external measurement and evaluation circuit.

## Revendications

1. Procédé de mesure de la vitesse d'écoulement d'un fluide dans un volume parcouru par un champ magnétique,
**caractérisé en ce que**
la résistance électrique d'un semi-conducteur avoisinant le volume est mesurée et la vitesse d'écoulement du fluide est déterminée par ordinateur à partir de cette mesure.

2. Procédé selon la revendication 1, **caractérisé en ce que** le volume est l'intérieur d'une section de tube et le semi-conducteur est disposé sur la paroi du tube.

3. Procédé selon la revendication 2, **caractérisé en ce qu'**au moins deux semi-conducteurs sont disposés à des endroits de la paroi du tube sensiblement opposés par paire de façon que la ligne de jonction entre deux semi-conducteurs soit perpendiculaire au sens d'écoulement du fluide et sensiblement perpendiculaire au sens du champ magnétique.

4. Procédé selon l'une des revendications précédentes, **caractérisé en ce que** le fluide est non conducteur et électriquement polarisable.

5. Procédé selon l'une des revendications précédentes, **caractérisé en ce qu'**entre le semi-conducteur et le fluide est disposée une couche d'isolation qui interdit l'échange de charge entre le fluide et le semi-conducteur.

6. Procédé selon la revendication 5, **caractérisé en ce que** la couche d'isolation présente une constante diélectrique la plus petite possible.

7. Procédé selon l'une des revendications précédentes, **caractérisé en ce qu'**un champ magnétique permanent est employé.

8. Procédé selon l'une des revendications précédentes, **caractérisé en ce que** le semi-conducteur est constitué comme électrode de grille d'un transistor à effet de champ (TEC), le TEC étant disposé sur au moins une surface de délimitation du volume.

9. Procédé selon l'une des revendications 3 ou 8, **caractérisé en ce que** les substrats d'au moins deux TEC disposés à l'opposé l'un de l'autre sont reliés de façon à être maintenus à un même potentiel électrique.

10. Procédé selon l'une des revendications précédentes, **caractérisé en ce qu'u**n circuit de mesure électrique déterminé par la résistance variable du semi-conducteur est découplé galvaniquement de la ligne de mesure se trouvant dans le fluide et utilisé pour adapter l'impédance à un circuit de mesure et d'évaluation extérieur.
